# EUROPEAN PATENT SPECIFICATION

(11) **EP 4 135 140 B1**
(45) Date of publication and mention of the grant of the patent: **05.11.2025**
(21) Application number: 21785283.9
(22) Date of filing: 06.04.2021
(51) Int. Cl.: H02H 7/08, B60L 3/00, B60L 15/20, H02P 27/08, H02P 29/024, H02P 29/028

(54) **DRIVING ELECTRIC MOTOR CONTROL SYSTEM AND METHOD FOR ENSURING SAFETY THEREOF**
STEUERUNGSSYSTEM FÜR EINEN ELEKTRISCHEN ANTRIEBSMOTOR UND VERFAHREN ZUR GEWÄHRLEISTUNG DER SICHERHEIT DAFÜR
SYSTÈME DE COMMANDE DE MOTEUR ÉLECTRIQUE D'ENTRAÎNEMENT ET PROCÉDÉ POUR ASSURER LA SÉCURITÉ DE CELUI-CI

(30) Priority: 07.04.2020 CN 202010265873
(43) Date of publication of application: 15.02.2023
(73) Proprietor: Hycet Transmission System (Jiangsu) Co., Ltd., Zhenjiang, Jiangsu 212200 (CN)
(72) Inventor: YANG, Xiaolong, Baoding, Hebei 071000 (CN); RENE, Louisor, Baoding, Hebei 071000 (CN); LIU, Hao, Baoding, Hebei 071000 (CN); REN, Weihong, Baoding, Hebei 071000 (CN); JIA, Yikun, Baoding, Hebei 071000 (CN); WANG, Ping, Baoding, Hebei 071000 (CN)
(74) Representative: Viering, Jentschura & Partner mbB Patent- und Rechtsanwälte
(86) International application number: PCT/CN2021/085691
(87) International publication number: WO 2021/204118

(56) References cited:
- WO-A1-2015/003619
- CN-A- 102 536 033
- CN-A- 109 656 127
- CN-A- 110 571 763
- CN-U- 206 835 021
- KR-B1- 101 955 509
- US-A1- 2016 149 534
- US-B2- 10 447 196

## Description

### TECHNICAL FIELD

The present disclosure relates to the technical field of electronic circuits and more particularly, to a driving motor control system and a method for ensuring a safety thereof.

### BACKGROUND

A driving motor system is one of the core systems of an electric vehicle and a main driving system of the vehicle, and characteristics of which determine main performance indexes of the vehicle. A quality of the driving motor system directly affects power performance, economy and driving experience of the vehicle.

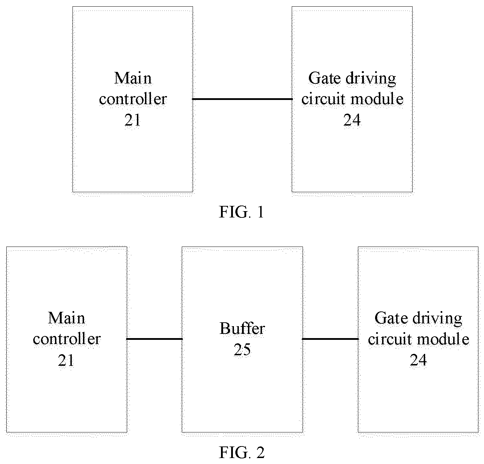

The driving motor system is mainly composed of a controller, a gate driving circuit module and other components. Taking that the controller uses a Digital Signal Processor (DSP) as an example, a circuit module connection block diagram thereof is shown in FIG 1. Although the circuit is simple, the driving motor system has the risk of failure when the DSP crashes or is damaged. In addition, there is a driving motor system in the prior art, which is provided with a buffer arranged between the DSP and the gate driving circuit module in comparison to the circuit module shown in FIG. 1. A specific circuit diagram is shown in FIG. 2. The driving motor system as shown in FIG. 2 may still fail when the DSP crashes or is damaged.

WO 2015/003619 A1 discloses a motor control system of an electric vehicle, a controlling method for the motor control system and an electric vehicle are provided. The motor control system includes: an IGBT module, connected with a motor of the electric vehicle; a detection module, configured to detect a motor speed; a drive module, configured to drive IGBTs in the IGBT module to turn on or off so as to control the motor to work or stop working; a first control module; a second control module communicated with the first control module; and a channel selection module, configured to select a channel of the second control module when the first control module has a fault. When the second control module is selected, it sends a second control signal to the drive module according to the motor speed at a predetermined time before the first control module has the fault, so as to control the motor to stop working.

US 10447196 B2 discloses a motor bridge driver integrated circuit comprises a first set of input ports arranged to receive control signals from a first microprocessor, a second set of input ports arranged to receive control signals from a second microprocessor, and at least one set of output ports arranged to output motor phase switching signals to the switches of a motor bridge. A diagnostic circuit receives and monitors the control signals received from the two microprocessors and from those signals determine which microprocessor is to be treated as a master and which is to be treated as a slave at any given time by the motor bridge driver. An arbitration circuit selectively enables only the master microprocessor to the take control of the motor bridge at any given time while preventing the slave microprocessor from taking control of the motor bridge.

### SUMMARY

In view of this, the present disclosure aims to provide a driving motor control system to realize double-point control over a gate driving control right and avoid the risk of single-point failure of the system due to the fault of a main controller.

To achieve the above object, the technical solutions of the present disclosure are realized as follows:
A driving motor control system according to claim 1, wherein the driving motor control system includes: a main controller, a gate driving logic control module, an auxiliary controller and a gate driving circuit module; the main controller is electrically connected to the gate driving logic control module, and is used for acquiring a gate driving control right by interacting with the gate driving logic control module, so as to carry out motor driving control through the gate driving logic control module and the gate driving circuit module in turn; the auxiliary controller is electrically connected to the main controller and the gate driving logic control module, and is used for taking over the gate driving control right by interacting with the gate driving logic control module on the condition that the main controller is in a fault state, so as to carry out motor driving control through the gate driving logic control module and the gate driving circuit module in turn; the gate driving logic control module is electrically connected to the gate driving circuit module and is used for realizing control, by the main controller and the auxiliary controller, over the gate driving control right and for transmitting, to the gate driving circuit module, a control signal output by the main controller or the auxiliary controller in response to the gate driving control right; and the gate driving circuit module is electrically connected to a motor and is used for driving the motor in response to the control signal, wherein the gate driving logic control module includes: a control right processing circuit, a PWM driving signal buffer circuit and a gate protection control circuit; the control right processing circuit is electrically connected to the main controller, the auxiliary controller, the gate protection control circuit and the PWM driving signal buffer circuit, and is used for executing: outputting a first logic level signal for enabling the main controller to acquire the gate driving control right to the PWM driving signal buffer circuit on the condition that a first enable signal of the main controller is received and a second enable signal of the auxiliary controller is not received; and outputting a second logic level signal for enabling the auxiliary controller to take over the gate driving control right to the gate protection control circuit on the condition that the second enable signal of the auxiliary controller is received; and the PWM driving signal buffer circuit is electrically connected to the gate driving circuit module and the main controller, and is used for transmitting the control signal output by the main controller in response to the gate driving control right to the gate driving circuit module on the condition that the first logic level signal is received; and the gate protection control circuit is electrically connected to the gate driving circuit module and the auxiliary controller, and is used for transmitting the control signal output by the auxiliary controller in response to the gate driving control right to the gate driving circuit module on the condition that the second logic level signal is received.

Preferably, the control right processing circuit includes: a filter blocking circuit, a level translation buffer and a flip-flop; the filter blocking circuit is electrically connected to the main controller, and is used for converting the received first enable signal into a first pulse signal; the level translation buffer is electrically connected to the auxiliary controller and the flip-flop, and is used for outputting a second pulse signal on the condition that the second enable signal is received; and the flip-flop is electrically connected to the PWM driving signal buffer circuit and the gate protection control circuit, and is used for executing: outputting the first logic level signal on the condition that the first pulse signal is received and the second pulse signal is not received; or outputting the second logic level signal on the condition that the second pulse signal is received.

Preferably, the control right processing circuit further includes: a power supply used for providing a plurality of working voltages to the flip-flop.

Preferably, the PWM driving signal buffer circuit includes: a logic gate circuit and a first buffer; the logic gate circuit is electrically connected to the control right processing circuit and is used for converting the received first logic level signal into a logic enable signal; and the first buffer is electrically connected to the logic gate circuit and the main controller, and is used for transmitting the control signal output by the main controller to the gate driving circuit module on the condition that the logic enable signal is received.

Preferably, the gate protection control circuit includes: a logic interlock circuit and a second buffer; the logic interlock circuit is electrically connected to the auxiliary controller and is used for converting the control signal from the auxiliary controller into a control logic signal illustrating a current safety mode; and the second buffer is electrically connected to the control right processing circuit, the logic interlock circuit and the gate driving circuit module, and is used for converting the control logic signal into a motor driving signal on the condition that the second logic level signal is received, and outputting the motor driving signal to the gate driving circuit module, so that the gate driving circuit module drives the motor to operate in a shut pulse off mode or an active short circuit mode.

Preferably, the gate driving logic control module further includes: a driving fault reset circuit used for controlling reset of the driving motor system on the condition that the control right of the gate driving circuit module is controlled and switched by the main controller and the auxiliary controller.

Preferably, the gate driving logic control module further includes: a driving fault monitoring circuit used for filtering driving fault signals illustrating high and low edges of the gate driving from the gate driving circuit module and sending the filtered signals to the auxiliary controller.

Compared with the prior art, the driving motor control system according to the present disclosure has the following advantages:
the designed gate driving logic control module is utilized to realize the control over the gate driving control right by the main controller and the auxiliary controller, and the two-point control over the gate driving control right; and the gate driving control right is taken over by interacting with the gate driving logic control module on the condition that the main controller is in the fault state, thereby avoiding the risk of single-point failure of the system caused by the running crash of the main controller, and further meeting the safety requirements for the driving motor system in the prior art.

Another object of the present disclosure is to provide a method for ensuring a safety of a driving motor control system, so as to ensure the safety of the driving motor control system.

To achieve the above object, the technical solutions of the present disclosure are realized as follows:
A method according to claim 8 adapted to ensure a safety of a driving motor control system, wherein the driving motor control system above is used, and the method for ensuring the safety of the driving motor control system includes: controlling the auxiliary controller to take over the gate driving control right of the gate driving circuit module on the condition that the main controller is in a fault state; and transmitting a control signal output by the auxiliary controller in response to the gate driving control right to the gate driving circuit module to enable the gate driving circuit module to drive a motor to operate in a shut pulse off mode or an active short circuit mode.

The method for ensuring the safety of the driving motor control system has the same advantages as that of the above-mentioned driving motor control system relative to the prior art, which will not be elaborated herein.

The present disclosure further provides a machine-readable storage medium, wherein the machine-readable storage medium stores an instruction, and the instruction is used for causing a machine to execute the method for ensuring the safety of the driving motor control system above.

The machine-readable storage medium and the method for ensuring the safety of the driving motor control system above have the same advantages as that of the prior art, which will not be elaborated herein.

Other features and advantages of the present disclosure will be described in detail in the subsequent detailed description section.

The above description is merely a summary of the technical solutions of the present disclosure. In order to more clearly know the technical means of the present disclosure to enable the implementation according to the contents of the description, and in order to make the above and other objects, features and advantages of the present disclosure more apparent and understandable, the particular embodiments of the present disclosure are provided below.

### BRIEF DESCRIPTION OF THE DRAWINGS

In order to more clearly illustrate the technical solutions of the embodiments of the present disclosure or the related art, the drawings that are required to describe the embodiments or the related art will be briefly introduced below. Apparently, the drawings that are described below are embodiments of the present disclosure, and a person skilled in the art can obtain other drawings according to these drawings without paying creative work.

The drawings constituting a part of the present disclosure are intended to provide a further understanding of the present disclosure. The illustrative embodiments of the present disclosure and the description thereof are intended to explain the present disclosure, and do not constitute an improper limitation of the present disclosure. In the drawings:
FIG. 1 is a system block diagram of a driving motor system in the prior art;
FIG. 2 is a system block diagram of another driving motor system in the prior art;
FIG. 3 is a system block diagram of a driving motor control system according to the present disclosure;
FIG. 4 is a circuit diagram of a gate driving logic control module according to the present disclosure;
FIG. 5 is a flow chart of a method of ensuring a safety of a driving motor control system according to the present disclosure;
FIG. 6 schematically shows a block diagram of a computing-processing device for executing the method according to the present disclosure; and
FIG. 7 schematically shows a storage unit for holding or carrying a program code for implementing the method according to the present disclosure.

### DETAILED DESCRIPTION OF THE EMBODIMENTS

In order to make the objects, the technical solutions and the advantages of the embodiments of the present disclosure clearer, the technical solutions of the embodiments of the present disclosure will be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall within the protection scope of the present disclosure.

It should be noted that, in case of no conflict, the embodiments in the present disclosure and the features in the embodiments can be combined with each other.

A driving motor system is one of the core systems of an electric vehicle. In the prior art, there are structures in FIG. 1 and FIG. 2, both of which have a risk of single-point failure. The single-point failure means that when a node fails, there is no standby node to use, resulting in the overall failure. FIG. 2 is similar to FIG. 1. In FIG. 2, a PWM driving signal sent by a buffer to a gate driving circuit module is a buffered PWM driving signal, and a special fault signal is also a buffered signal.

The technical solutions of the present disclosure will be described in detail below. A driving motor system in the prior art includes a main controller and a gate driving circuit module. The following embodiments will take a DSP used as a main controller as an example, wherein the DSP enables the gate driving circuit module to drive the motor by sending out a PWM driving signal.

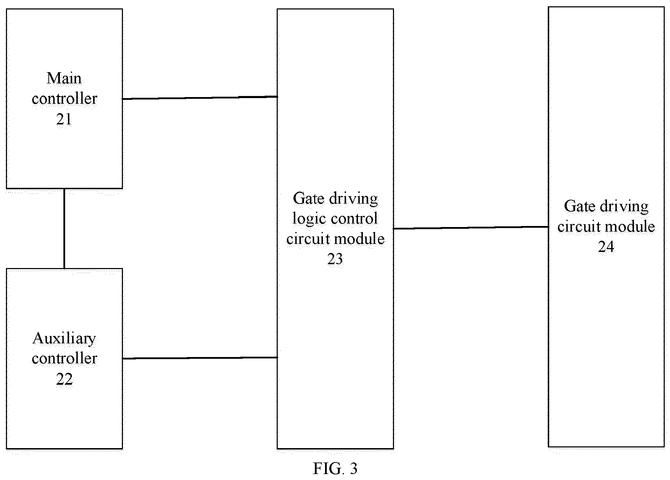

FIG. 3 is a block diagram showing modules of a driving motor control system according to the present disclosure. As shown in FIG. 3, the driving motor control system includes: a main controller 21, a gate driving logic control module 23, an auxiliary controller and a gate driving circuit module 24, wherein a Complex Programmable Logic Device (CPLD) is employed as the auxiliary controller 22 in this embodiment.

The main controller 21 is electrically connected to the gate driving logic control module 23, and is used for acquiring a gate driving control right by interacting with the gate driving logic control module 23, so as to carry out motor driving control through the gate driving logic control module 23 and the gate driving circuit module 24 in turn. The auxiliary controller 22 is electrically connected to the main controller 21 and the gate driving logic control module 23, and is used for taking over the gate driving control right by interacting with the gate driving logic control module 23 on the condition that the main controller 21 is in a fault state (including crash or damage, that is, control signals cannot be sent normally), so as to carry out motor driving control through the gate driving logic control module 23 and the gate driving circuit module 24 in turn. The gate driving logic control module 23 is electrically connected to the gate driving circuit module 24 and is used for realizing control, by the main controller 21 and the auxiliary controller 22, over the gate driving control right and for transmitting, to the gate driving circuit module 24, a control signal output by the main controller 21 or the auxiliary controller 22 in response to the gate driving control right. The gate driving circuit module 24 is electrically connected to the motor and is used for driving the motor in response to the control signal.

With reference to FIG. 3, a connection relationship of the main controller 21, the gate driving logic control module 23, the auxiliary controller 22 and the gate driving circuit module 24 will be described in detail below.

A first enable signal output by the main controller 21 through a port is transmitted to the gate driving circuit module 23, and meanwhile, the main controller 21 receives a state feedback signal (used to reflect a gate driving state of the DSP) from the gate driving circuit module 23 through the port, so that the DSP may monitor a state of the gate driving control right. The main controller 21 may also send six modulated PWM driving signals to the gate driving logic control module 23, and the gate driving logic control module 23 buffers the PWM driving signals and sends the buffered signals to the gate driving circuit module 24, thus realizing the driving control of the motor by the main controller 21.

When a hardware failure occurs on the main controller 21, the auxiliary controller 22 outputs a second enable signal to the gate driving logic control module 23, and then the auxiliary controller 22 takes over the gate driving control right. An output feedback signal of the gate driving logic control module 23 (used to reflect a gate driving state of the CPLD) enters the auxiliary controller 22, and then the CPLD may monitor the state of the gate driving control right. The auxiliary controller 22 outputs two gate protection logic control signals to the gate driving logic control module 23, and the two signals are output to the gate driving circuit module 24 after internal processing by the gate driving logic control module 23. The CPLD may make the gate driving circuit module 24 to be in a safe mode, thus protecting the driving motor control system. The safe mode includes a Shut Pulse Off mode (SPO) or an Active Short Circuit (ASC).

The gate driving circuit module 24 outputs driving fault signals of high and low edges of the gate driving to the gate driving logic control module 23, and then the driving fault signals of high and low edges of the gate driving are filtered by the gate driving logic control module 23 and then output to the auxiliary controller 22, so that the CPLD may monitor the high and low edges of the gate driving and respond to system protection. The auxiliary controller 22 interacts with the main controller 21 through a SPI communication.

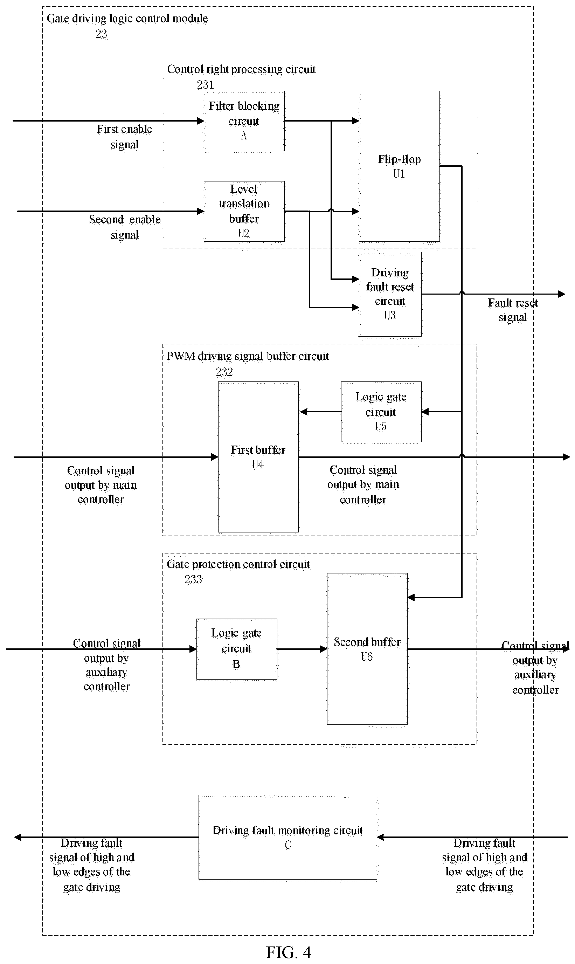

FIG. 4 is a circuit block diagram of the gate driving logic control module. As shown in FIG. 4, the gate driving logic control module 23 includes: a control right processing circuit 231, a PWM driving signal buffer circuit 232 and a gate protection control circuit 233. The control right processing circuit 231 is electrically connected to the DSP, the CPLD, the gate protection control circuit and the PWM driving signal buffer circuit 232, and is used for executing the following S401 and S402:

S401, outputting a first logic level signal for enabling the DSP to acquire the gate driving control right to the PWM driving signal buffer circuit 232 on the condition that a first enable signal of the DSP is received and a second enable signal of the CPLD is not received; and S402, outputting a second logic level signal for enabling the CPLD to take over the gate driving control right to the gate protection control circuit on the condition that the second enable signal of the auxiliary controller is received.

The PWM driving signal buffer circuit 232 is electrically connected to the gate driving circuit module and the DSP, and is used for transmitting the control signal output by the DSP in response to the gate driving control right to the gate driving circuit module on the condition that the first logic level signal is received; and the gate protection control circuit 233 is electrically connected to the gate driving circuit module and the CPLD, and is used for transmitting the control signal output by the CPLD in response to the gate driving control right to the gate driving circuit module on the condition that the second logic level signal is received.

Further preferably, the control right processing circuit 231 includes: a filter blocking circuit A, a level translation buffer U2 and a flip-flop U1, wherein the flip-flop U1 may preferably be a class D edge flip-flop. In the prior art, a control signal of the gate driving circuit module as shown in FIG. 1 is easily interfered and has poor reliability. The designed level translation buffer U2 can be utilized to avoid the control signal from being interfered and improve the reliability of the control signal. The filter blocking circuit A is electrically connected to the DSP, and is used for converting the received first enable signal into a first pulse signal; the level translation buffer U2 is electrically connected to the CPLD and the class D edge flip-flop U1, and is used for outputting a second pulse signal on the condition that the second enable signal is received; and the class D edge flip-flop U1 is electrically connected to the PWM driving signal buffer circuit 232 and the gate protection control circuit 233, and is used for executing S403 or S404: S403, outputting the first logic level signal on the condition that the first pulse signal is received and the second pulse signal is not received; and S404, outputting the second logic level signal on the condition that the second pulse signal is received.

Further preferably, as shown in FIG. 1 and FIG. 2, when a power supply in the driving motor system is lost, the driving motor system still has a risk of single-point failure. To avoid the above problems, the control right processing circuit may further include: a power supply used for providing a plurality of working voltages to the class D edge flip-flop. The power supply may be set as two power supplies with a voltage of 5V, and the two power supplies are independent of each other.

Further preferably, the PWM driving signal buffer circuit 232 may include: a logic gate circuit B and a first buffer U4; wherein, the logic gate circuit is preferably an exclusive OR gate, which is electrically connected to the class D edge flip-flop and is used for converting the received first logic level signal into a logic enable signal; and the first buffer U4 is preferably a first tri-state logic buffer, which is electrically connected to the exclusive OR gate and the DSP, and is used for transmitting the control signal output by the DSP, that is, the PWM driving signal, to the gate driving circuit module when the logic enable signal is received. The first tri-state logic buffer is also configured with multiple power supplies providing voltages.

The gate protection control circuit 233 includes: a logic interlock circuit (dashed box B in FIG. 4) and a second buffer U6. The logic interlock circuit is electrically connected to the CPLD and is used for converting the control signal from the CPLD into a control logic signal illustrating a current safety mode; and the second buffer U6 is preferably a second tri-state logic buffer, wherein the second tri-state logic buffer is electrically connected to the control right processing circuit 231, the logic interlock circuit B and the gate driving circuit module, and is used for converting the control logic signal into a motor driving signal when the second logic level signal is received, and outputting the motor driving signal to the gate driving circuit module, so that the gate driving circuit module drives the motor to operate in a Shut Pulse Off mode (SPO) or an Active Short Circuit mode (ASC).

Further preferably, in order to avoid the risk of single-point failure of the driving motor system when the power supply in the driving motor system is lost, the first tri-state logic buffer and the second tri-state logic buffer both adopt multiple power supplies, for example, two power supplies.

In this embodiment, a corresponding relationship between the input of the logic interlock circuit and the operating mode of the motor driven by the gate driving circuit module after output is shown in Table 1 below, wherein "H" means that one or two gate protection logic control signals from the CPLD are high level signals, and "L" means that the one or two gate protection logic control signals from the CPLD are low level signals.

**Table 1**

| One input signal from the auxiliary controller | Two input signals from the auxiliary controller | Gate driving control state |
|---|---|---|
| H | H | SPO |
| L | H | Low-edge ASC |
| H | L | High-edge ASC |
| L | L | SPO |

Further preferably, the gate driving logic control module further includes: a driving fault reset circuit U3 used for controlling reset of the driving motor system when the control right of the gate driving circuit module is controlled and switched by the DSP and the CPLD. The driving fault reset circuit is controlled by a first AND gate, which can output one or more low pulse logic signals (fault reset signals) every time performing taking over or switching action on the gate driving control right, and then output the signals to the gate driving circuit module through the gate driving logic control module, so as to reset the gate driving fault.

The gate driving logic control module further includes: a driving fault monitoring circuit C used for filtering driving fault signals illustrating high and low edges of the gate driving from the gate driving circuit module and sending the filtered signals to the CPLD, so as to monitor the driving fault of the gate driving circuit module. Certainly, when a failure of high and low edges of the gate driving occurs, the driving fault monitoring circuit may display the failure of high and low edges, which is convenient for users to know.

Through the above embodiments, the gate driving logic control module is used to realize the dual-point control by the DSP and the CPLD, which avoids the risk of single-point failure of the driving motor system caused by the failure of the DSP, such as running crash, and the reliability of the control signal is improved by the PWM driving signal buffer circuit, and the problem of single-point failure caused by the loss of the single power supply in the system is avoided by the multiple power supply design. Moreover, the gate driving ASC or SPO logic control can be realized by the CPLD.

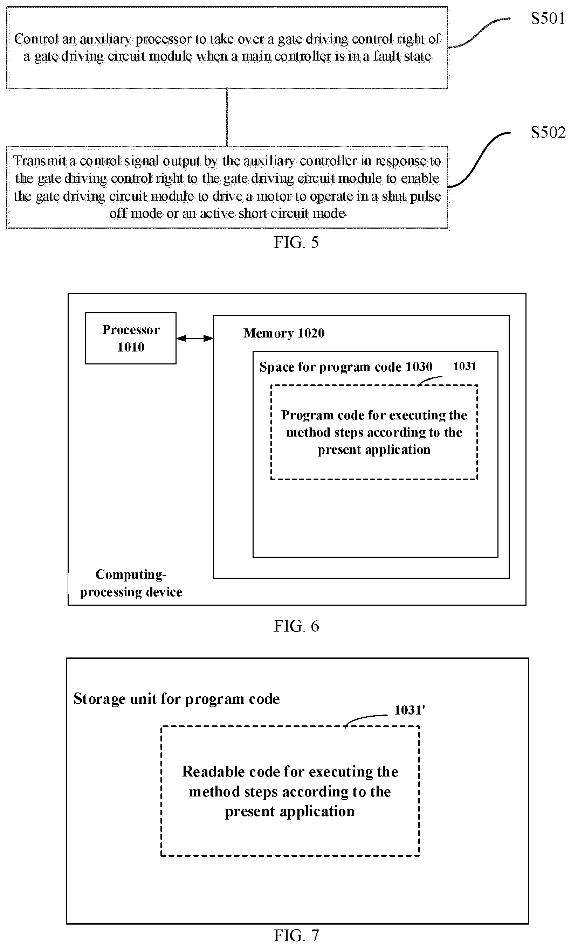

FIG. 5 is a flow chart of a method for ensuring the safety of the driving motor control system. The method uses the driving motor control system in FIG. 3 and FIG. 4. As shown in FIG. 5, the method for ensuring the safety of the driving motor control system includes:
S501: controlling the auxiliary controller to take over the gate driving control right of the gate driving circuit module when the main controller is in a fault state.
S502: transmitting a control signal output by the auxiliary controller in response to the gate driving control right to the gate driving circuit module to enable the gate driving circuit module to drive the motor to operate in a shut pulse off mode or an active short circuit mode.

Compared with the prior art, the method for ensuring the safety of the driving motor control system has the same or similar technical solutions and technical effects as the driving motor control system described in FIG. 3 and FIG. 4, which will not be repeated here.

In other embodiments, the driving motor control system includes a processor and a memory, and the above-mentioned execution steps for ensuring the safety of the driving motor control system are stored in the memory as program units, and the processor executes the above-mentioned program units stored in the memory to realize corresponding functions.

The processor contains a core, and the core retrieves the corresponding program unit from the memory. One or more cores may be set to ensure the safety of the driving motor control system by adjusting core parameters.

The memory may probably include a volatile memory; a random access memory (RAM) and/or a non-volatile memory in a computer-readable medium, such as a read only memory (ROM) or a flash memory (flash RAM). The memory includes at least one memory chip.

An embodiment of the present disclosure provides a machine-readable storage medium, wherein the machine-readable storage medium stores an instruction, and the instruction is used for causing a machine to execute the method for ensuring the safety of the driving motor control system above.

An embodiment of the present disclosure provides a processor for running a program, wherein the method for ensuring the safety of the driving motor control system is executed when the program runs.

The present disclosure further provides a computer program product which, when executed on a data processing device, is suitable for executing a program initialized with the steps of the method for ensuring the safety of the driving motor control system in Embodiment 1.

It should be appreciated by those skilled in this art that the embodiment of the present disclosure may be provided as methods, systems or computer program products. Therefore, the embodiments of the present disclosure may take the form of complete hardware embodiments, complete software embodiments or software-hardware combined embodiments. Moreover, the embodiments of the present disclosure may take the form of a computer program product embodied on one or more computer usable storage media (including but not limited to disk storage, CD-ROM, optical storage, etc.) in which computer usable program codes are included.

The present disclosure is described with reference to the flow charts and/or block diagrams of the method, apparatus (system), and computer program products according to the embodiments of the present disclosure. It should be appreciated that each flow and/or block in the flow charts and/or block diagrams, and combinations of the flows and/or blocks in the flow charts and/or block diagrams may be implemented by computer program instructions. These computer program instructions may be provided to a general purpose computer, a special purpose computer, an embedded processor, or a processor of other programmable data processing apparatus to produce a machine for the instructions executed by the computer or the processor of other programmable data processing apparatus to generate a device for implementing the functions specified in one or more flows of the flow chart and/or in one or more blocks of the block diagram.

These computer program instructions may also be provided to a computer readable memory that can guide the computer or other programmable data processing apparatus to operate in a given manner, so that the instructions stored in the computer readable memory generate a product including an instruction device that implements the functions specified in one or more flows of the flow chart and/or in one or more blocks of the block diagram.

These computer program instructions may also be loaded to a computer, or other programmable data processing apparatus, so that a series of operating steps are executed on the computer, or other programmable data processing apparatus to produce processing implemented by the computer, so that the instructions executed in the computer or other programmable data processing apparatus provide steps for implementing the functions specified in one or more flows of the flow chart and/or in one or more blocks of the block diagram.

In a typical configuration, the computing device includes one or more processors (CPU), input/output interfaces, network interfaces, and memory.

The memory may probably include a volatile memory, a random access memory (RAM) and/or non-volatile memory in a computer readable medium, such as a read only memory (ROM) or a flash memory (flash RAM). The memory is an example of the computer-readable medium.

The computer-readable media include permanent and non-permanent, removable and non-removable media, which can realize information storage by any method or technology. The information may be computer readable instructions, data structures, modules of programs, or other data. Examples of the storage media for computers include, but are not limited to phase change memory (PRAM), static random access memory (SRAM), dynamic random access memory (DRAM), other types of random access memory (RAM), read only memory (ROM), electrically erasable programmable read only memory (EEPROM), flash memory or other memory technologies, read-only compact disc read-only memory (CD-ROM), digital versatile disc (DVD) or other optical storage, magnetic cassettes, magnetic tapes, magnetic disk storage or other magnetic storage devices or any other non-transmission medium, and may be used to store information that may be accessed by a computing apparatus. As defined herein, the computer-readable medium does not include temporary computer-readable media (transitory media), such as modulated data signals and carrier waves.

The above-described apparatus embodiments are merely illustrative, wherein the units that are described as separate components may or may not be physically separate, and the components that are displayed as units may or may not be physical units; in other words, they may be located at the same one location, and may also be distributed to a plurality of network units. Part or all modules therein may be selected according to actual needs to realize the objective of achieving the technical solution of the embodiment. A person skilled in the art can understand and implement the technical solutions without paying creative work.

Each component embodiment of the present disclosure may be implemented by hardware, or by software modules that are operated on one or more processors, or by a combination thereof. A person skilled in the art should understand that some or all of the functions of some or all of the components of the computing-processing device according to the embodiments of the present disclosure may be implemented by using a microprocessor or a digital signal processor (DSP) in practice. The present disclosure may also be implemented as device or apparatus programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

For example, FIG. 6 shows a computing-processing device that can implement the method according to the present disclosure. The computing-processing device traditionally includes a processor 1010 and a computer program product or computer-readable medium in the form of a memory 1020. The memory 1020 may be electronic memories such as flash memory, Electrically Erasable Programmable Read Only Memory (EEPROM), EPROM, hard disk or ROM. The memory 1020 has a storage space 1030 of a program code 1031 for implementing any steps of the above method. For example, the storage space 1030 for program code may contain program codes 1031 for individually implementing each of the steps of the above method. Those program codes may be read from one or more computer program products or be written into the one or more computer program products. These computer program products include program code carriers such as hard disks, compact disks (CD), memory cards, or floppy disks. Such computer program products are usually portable or fixed storage units as shown in FIG. 7. The storage unit may have storage segments or storage spaces with similar arrangement to the memory 1020 of the computing-processing device in FIG. 6. The program codes may for example be compressed in a suitable form. Generally, the storage unit contains a computer-readable code 1031', which can be read by a processor like 1010. When those codes are executed by the computing-processing device, the codes cause the computing-processing device to implement each of the steps of the method described above.

It should be further noted that the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an..." does not exclude other same elements existing in the process, the method, the article, or the device that includes the element.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

Many details are discussed in the specification provided herein. However, it can be understood that the embodiments of the present disclosure may be implemented without those concrete details. In some of the embodiments, well-known processes, structures and techniques are not described in detail, so as not to affect the understanding of the description.

Finally, it should be noted that the above embodiments are merely intended to explain the technical solutions of the present disclosure, and not to limit them. Although the present disclosure is explained in detail by referring to the above embodiments, a person skilled in the art should understand that he can still modify the technical solutions set forth by the above embodiments, or make equivalent substitutions to part of the technical features of them.

## Claims

1. A driving motor control system comprises: a main controller (21), a gate driving logic control module (23), an auxiliary controller (22) and a gate driving circuit module (24);
the main controller (21) is electrically connected to the gate driving logic control module (23), and is used for acquiring a gate driving control right by interacting with the gate driving logic control module (23), so as to carry out motor driving control through the gate driving logic control module (23) and the gate driving circuit module (24) in turn;
the auxiliary controller (22) is electrically connected to the main controller (21) and the gate driving logic control module (23), and is used for taking over the gate driving control right by interacting with the gate driving logic control module (23) on the condition that the main controller (21) is in a fault state, so as to carry out motor driving control through the gate driving logic control module (23) and the gate driving circuit module (24) in turn;
the gate driving logic control module (23) is electrically connected to the gate driving circuit module (24), and is used for realizing control, by the main controller (21) and the auxiliary controller (22), over the gate driving control right and for transmitting, to the gate driving circuit module (24), a control signal output by the main controller (21) or the auxiliary controller (22) in response to the gate driving control right; and
the gate driving circuit module (24) is electrically connected to a motor and is used for driving the motor in response to the control signal,
wherein the gate driving logic control module (23) comprises: a control right processing circuit (231), a PWM driving signal buffer circuit (232) and a gate protection control circuit (233);
the driving motor control system is **characterised in that**
the control right processing circuit (231) is electrically connected to the main controller (21), the auxiliary controller (22), the gate protection control circuit (233) and the PWM driving signal buffer circuit (232), and is used for executing:
outputting a first logic level signal for enabling the main controller (21) to acquire the gate driving control right to the PWM driving signal buffer circuit (232) on the condition that a first enable signal of the main controller (21) is received and a second enable signal of the auxiliary controller (22) is not received; and
outputting a second logic level signal for enabling the auxiliary controller (22) to take over the gate driving control right to the gate protection control circuit (233) on the condition that the second enable signal of the auxiliary controller (22) is received;
the PWM driving signal buffer circuit (232) is electrically connected to the gate driving circuit module (24) and the main controller (21), and is used for transmitting the control signal output by the main controller (21) in response to the gate driving control right to the gate driving circuit module (24) on the condition that the first logic level signal is received; and
the gate protection control circuit (233) is electrically connected to the gate driving circuit module (24) and the auxiliary controller (22), and is used for transmitting the control signal output by the auxiliary controller (22) in response to the gate driving control right to the gate driving circuit module (24) on the condition that the second logic level signal is received.

2. The driving motor control system according to claim 1, **characterized in that**, the control right processing circuit (231) comprises: a filter blocking circuit (A), a level translation buffer (U2) and a flip-flop (U1);
the filter blocking circuit (A) is electrically connected to the main controller (21), and is used for converting the received first enable signal into a first pulse signal;
the level translation buffer (U2) is electrically connected to the auxiliary controller (22) and the flip-flop (U1), and is used for outputting a second pulse signal on the condition that the second enable signal is received; and
the flip-flop (U1) is electrically connected to the PWM driving signal buffer circuit (232) and the gate protection control circuit (233), and is used for executing:
outputting the first logic level signal on the condition that the first pulse signal is received and the second pulse signal is not received; or
outputting the second logic level signal on the condition that the second pulse signal is received.

3. The driving motor control system according to claim 1, **characterized in that**, the control right processing circuit (231) further comprises: a power supply used for providing a plurality of working voltages to the flip-flop (U1).

4. The driving motor control system according to claim 1, **characterized in that**, the PWM driving signal buffer circuit (232) further comprises: a logic gate circuit (U5) and a first buffer (U4);
the logic gate circuit (U5) is electrically connected to the control right processing circuit (231) and is used for converting the received first logic level signal into a logic enable signal; and
the first buffer (U4) is electrically connected to the logic gate circuit (U5) and the main controller (21), and is used for transmitting the control signal output by the main controller (21) to the gate driving circuit module (24) on the condition that the logic enable signal is received.

5. The driving motor system according to claim 1, **characterized in that**, the gate protection control circuit (233) comprises: a logic interlock circuit (B) and a second buffer (U6);
the logic interlock circuit (B) is electrically connected to the auxiliary controller (22) and is used for converting the control signal from the auxiliary controller (22) into a control logic signal illustrating a current safety mode; and
the second buffer (U6) is electrically connected to the control right processing circuit (231), the logic interlock circuit (B) and the gate driving circuit module (24), and is used for converting the control logic signal into a motor driving signal on the condition that the second logic level signal is received, and outputting the motor driving signal to the gate driving circuit module (24), so that the gate driving circuit module (24) drives the motor to operate in a shut pulse off mode or an active short circuit mode.

6. The driving motor control system according to claim 1, **characterized in that**, the gate driving logic control module (23) further comprises:
a driving fault reset circuit (U3) used for controlling reset of the driving motor system on the condition that the control right of the gate driving circuit module (24) is controlled and switched by the main controller (21) and the auxiliary controller (22).

7. The driving motor control system according to claim 1, **characterized in that**, the gate driving logic control module (23) further comprises:
a driving fault monitoring circuit (C) used for filtering driving fault signals illustrating high and low edges of the gate driving from the gate driving circuit module (24) and sending the filtered signals to the auxiliary controller (22).

8. A method adapted to ensure a safety of a driving motor control system according to any one of claims 1-7, and the method comprises:
controlling the auxiliary controller (22) to take over the gate driving control right of the gate driving circuit module (24) on the condition that the main controller (21) is in a fault state; and
transmitting a control signal output by the auxiliary controller (22) in response to the gate driving control right to the gate driving circuit module (24) to enable the gate driving circuit module (24) to drive a motor to operate in a shut pulse off mode or an active short circuit mode.

9. A machine-readable storage medium, **characterized in that**, the machine-readable storage medium stores an instruction, and the instruction is used for causing a machine to execute the method adapted to ensure the safety of the driving motor control system according to claim 8.

10. A computing-processing device, **characterized in that**, comprising:
a memory in which a computer-readable code is stored; and
one or more processors, wherein when the computer-readable code is executed by the one or more processors, the computing-processing device executes the method adapted to ensure the safety of the driving motor control system according to claim 8.

11. A computer program comprising a computer-readable code that, when run on a computing-processing device, causes the computing-processing device to execute the method adapted to ensure the safety of the driving motor control system according to claim 8.

## Patentansprüche

1. Steuerungssystem für einen Antriebsmotor umfassend:
eine Hauptsteuerung (21), ein Gate-Antrieb-Logiksteuerungsmodul (23), eine Hilfssteuerung (22) und ein Gate-Antrieb-Schaltungsmodul (24);
wobei die Hauptsteuerung (21) elektrisch mit dem Gate-Antrieb-Logiksteuerungsmodul (23) verbunden ist und dazu dient, durch Interaktion mit dem Gate-Antrieb-Logiksteuerungsmodul (23) ein Gate-Antrieb-Steuerungsrecht zu erwerben, um die Motor-Antriebssteuerung über das Gate-Antrieb-Logiksteuerungsmodul (23) und das Gate-Antrieb-Schaltungsmodul (24) nacheinander durchzuführen;
wobei die Hilfssteuerung (22) elektrisch mit der Hauptsteuerung (21) und dem Gate-Antrieb-Logiksteuerungsmodul (23) verbunden ist und dazu dient, bei einem Fehlerzustand der Hauptsteuerung (21) durch Interaktion mit dem Gate-Antrieb-Logiksteuerungsmodul (23) das Gate-Antrieb-Steuerungsrecht zu übernehmen, um die Motor-Antriebssteuerung über das Gate-Antrieb-Logiksteuerungsmodul (23) und das Gate-Antrieb-Schaltungsmodul (24) nacheinander durchzuführen;
wobei das Gate-Antrieb-Logiksteuerungsmodul (23) elektrisch mit dem Gate-Antrieb-Schaltungsmodul (24) verbunden ist und dazu dient, durch die Hauptsteuerung (21) und die Hilfssteuerung (22) die Steuerung über das Gate-Antrieb-Steuerungsrecht zu übernehmen und das dazu dient ein Steuerungssignals, das von der Hauptsteuerung (21) oder von der Hilfssteuerung (22) als Reaktion auf das Gate-Antrieb-Steuerungsrecht ausgegeben wird, an das Gate-Antrieb-Schaltungsmodul (24) zu übertragen; und
wobei das Gate-Antrieb-Schaltungsmodul (24) elektrisch mit einem Motor verbunden ist und dazu dient, den Motor in Reaktion auf das Steuerungssignal anzutreiben,
wobei das Gate-Antrieb-Logiksteuerungsmodul (23) umfasst:
eine Steuerungsrecht-Verarbeitungsschaltung (231), eine PWM-Antriebssignal-Pufferschaltung (232) und eine Gate-Schutz-Steuerungsschaltung (233),
wobei das Steuerungssystem für einen Antriebsmotor, **dadurch gekennzeichnet ist, dass**
die Steuerungsrecht-Verarbeitungsschaltung (231) elektrisch mit der Hauptsteuerung (21), der Hilfssteuerung (22), der Gate-Schutz-Steuerungsschaltung (233) und der PWM-Antriebssignal-Pufferschaltung (232) verbunden ist und dazu dient folgendes auszuführen:
Ausgeben eines ersten Logik-Pegelsignals, um der Hauptsteuerung (21) zu ermöglichen, das Gate-Antrieb-Steuerungsrecht für die PWM-Antriebssignal-Pufferschaltung (232) zu erwerben, unter der Bedingung, dass ein erstes Freigabesignal der Hauptsteuerung (21) empfangen wird und ein zweites Freigabesignal der Hilfssteuerung (22) nicht empfangen wird; und
Ausgeben eines zweiten Logik-Pegelsignals, um der Hilfssteuerung (22) zu ermöglichen, das Gate-Antrieb-Steuerungsrecht zu der Gate-Schutz-Steuerungsschaltung (233) zu übernehmen, unter der Bedingung, dass das zweite Freigabesignal der Hilfssteuerung (22) empfangen wird;
wobei die PWM-Antriebssignal-Pufferschaltung (232) elektrisch mit dem Gate-Antrieb-Schaltungsmodul (24) und der Hauptsteuerung (21) verbunden ist und dazu dient, das von der Hauptsteuerung (21) als Reaktion auf das Gate-Antrieb-Steuerungsrecht ausgegebene Steuerungssignal an das Gate-Antrieb-Schaltungsmodul (24) zu übertragen, unter der Bedingung, dass das erste Logik-Pegelsignal empfangen wird; und
wobei die Gate-Schutz-Steuerungsschaltung (233) elektrisch mit dem Gate-Antrieb-Schaltungsmodul (24) und der Hilfssteuerung (22) verbunden ist und dazu dient, das von der Hilfssteuerung (22) als Reaktion auf das Gate-Antrieb-Steuerungsrecht ausgegebene Steuerungssignal an das Gate-Antrieb-Schaltungsmodul (24) zu übertragen unter der Bedingung, dass das zweite Logik-Pegelsignal empfangen wird.

2. Das Steuerungssystem für einen Antriebsmotor nach Anspruch 1, **dadurch gekennzeichnet, dass** die Steuerungsrecht-Verarbeitungsschaltung (231) umfasst:
eine Filter-Sperrschaltung (A), einen Pegelumwandlungspuffer (U2) und einen Flip-Flop (UI);
wobei die Filter-Sperrschaltung (A) elektrisch mit der Hauptsteuerung (21) verbunden ist und dazu dient, das empfangene erste Freigabesignal in ein erstes Impulssignal umzuwandeln;
wobei der Pegelumwandlungspuffer (U2) elektrisch mit der Hilfssteuerung (22) und dem Flip-Flop (UI) verbunden ist und dazu dient, unter der Bedingung, dass das zweite Freigabesignal empfangen wird, ein zweites Impulssignal auszugeben; und
wobei der Flip-Flop (UI) elektrisch mit der PWM-Antriebssignal-Pufferschaltung (232) und der Gate-Schutz-Steuerungsschaltung (233) verbunden ist und dazu dient folgendes auszuführen:
Ausgeben des ersten Logik-Pegelsignals unter der Bedingung, dass das erste Impulssignal empfangen wird und das zweite Impulssignal nicht empfangen wird; oder
Ausgeben des zweiten Logik-Pegelsignals unter der Bedingung, dass das zweite Impulssignal empfangen wird.

3. Das Steuerungssystem für einen Antriebsmotor nach Anspruch 1, **dadurch gekennzeichnet, dass** die Steuerungsrecht-Verarbeitungsschaltung (231) ferner umfasst:
eine Stromversorgung, die dazu dient, dem Flip-Flop (UI) eine Vielzahl von Arbeitsspannungen zuzuführen.

4. Das Steuerungssystem für einen Antriebsmotor nach Anspruch 1, **dadurch gekennzeichnet, dass** die PWM-Antriebssignal-Pufferschaltung (232) ferner umfasst:
eine Logik-Gate-Schaltung (U5) und einen ersten Puffer (U4);
wobei die Logik-Gate-Schaltung (U5) elektrisch mit der Steuerungsrecht-Verarbeitungsschaltung (231) verbunden ist und dazu dient, das empfangene erste Logik-Pegelsignal in ein Logik-Freigabesignal umzuwandeln; und
wobei der erste Puffer (U4) elektrisch mit der Logik-Gate-Schaltung (U5) und der Hauptsteuerung (21) verbunden ist und dazu dient, das von der Hauptsteuerung (21) ausgegebene Steuerungssignal an das Gate-Antrieb-Schaltungsmodul (24) zu übertragen, unter der Bedingung, dass das Logik-Freigabesignal empfangen wird.

5. Das Steuerungssystem für einen Antriebsmotor nach Anspruch 1, **dadurch gekennzeichnet, dass** die Gate-Schutz-Steuerungsschaltung (233) umfasst:
eine Logik-Verriegelungsschaltung (B) und einen zweiten Puffer (U6);
wobei die Logik-Verriegelungsschaltung (B) elektrisch mit der Hilfssteuerung (22) verbunden ist und dazu dient, das Steuerungssignal von der Hilfssteuerung (22) in ein Steuerungs-Logiksignal umzuwandeln, das einen aktuellen Sicherheitsmodus anzeigt; und
wobei der zweite Puffer (U6) elektrisch mit der Steuerungsrecht-Verarbeitungsschaltung (231), der Logik-Verriegelungsschaltung (B) und dem Gate-Antrieb-Schaltungsmodul (24) verbunden ist und dazu dient, das Steuerungs-Logiksignal unter der Bedingung, dass das zweite Logik-Pegelsignal empfangen wird, in ein Motor-Antriebssignal umzuwandeln und das Motor-Antriebssignal an das Gate-Antrieb-Schaltungsmodul (24) auszugeben, so dass das Gate-Antrieb-Schaltungsmodul (24) den Motor so antreibt, dass er in einem shut-pulse-off-Modus oder einem active-short-circuit-Modus arbeitet.

6. Das Steuerungssystem für einen Antriebsmotor nach Anspruch 1, **dadurch gekennzeichnet, dass** das Gate-Antrieb-Logiksteuerungsmodul (23) umfasst:
eine Antriebsfehler-Rücksetzschaltung (U3), die zur Steuerung des Rücksetzens des Antriebsmotor-Systems verwendet wird, unter der Bedingung, dass das Steuerungsrecht des Gate-Antrieb-Schaltungsmoduls (24) durch die Hauptsteuerung (21) und die Hilfssteuerung (22) gesteuert und umgeschaltet wird.

7. Das Steuerungssystem für einen Antriebsmotor nach Anspruch 1, **dadurch gekennzeichnet, dass** das Gate-Antrieb-Logiksteuerungsmodul (23) ferner umfasst:
eine Antriebsfehler-Überwachungsschaltung (C), die zum Filtern von Antriebsfehlersignalen verwendet wird, die hohe und niedrige Grenzwerte der Gate-Ansteuerung aus dem Gate-Antrieb-Schaltungsmodul (24) darstellen, und zum Senden der gefilterten Signale an die Hilfssteuerung (22).

8. Verfahren zur Gewährleistung der Sicherheit eines Steuerungssystems für einen Antriebsmotor nach einem der Ansprüche 1 bis 7, wobei das Verfahren umfasst:
Steuern der Hilfssteuerung (22), um das Gate-Antrieb-Steuerungsrecht des Gate-Antrieb-Schaltungsmoduls (24) unter der Bedingung zu übernehmen, dass sich die Hauptsteuerung (21) in einem Fehlerzustand befindet; und
Übertragen eines Steuerungssignals, das von der Hilfssteuerung (22) als Reaktion auf das Gate-Antrieb-Steuerungsrecht ausgegeben wird, an das Gate-Antrieb-Schaltungsmodul (24), damit das Gate-Antrieb-Schaltungsmodul (24) einen Motor so ansteuern kann, dass er in einem shut-pulse-off-Modus oder einem active-short-circuit-Modus arbeitet.

9. Ein maschinenlesbares Speichermedium, **dadurch gekennzeichnet, dass** das maschinenlesbare Speichermedium einen Befehl speichert und der Befehl dazu verwendet wird, eine Maschine dazu zu veranlassen, das Verfahren auszuführen, das dazu eingerichtet ist, die Sicherheit des Steuerungssystems für einen Antriebsmotor gemäß Anspruch 8 zu gewährleisten.

10. Eine Rechenverarbeitungsvorrichtung, **dadurch gekennzeichnet, dass** es umfasst:
ein Speicher, in dem ein computerlesbarer Code gespeichert ist; und
einen oder mehrere Prozessoren, wobei, wenn der computerlesbare Code von dem einen oder den mehreren Prozessoren ausgeführt wird, die Rechenverarbeitungsvorrichtung das Verfahren ausführt, das dazu eingerichtet ist, die Sicherheit des Steuerungssystems für einen Antriebsmotor gemäß Anspruch 8 zu gewährleisten.

11. Ein Computerprogramm, das einen computerlesbaren Code umfasst, der, wenn er auf einer Rechenverarbeitungsvorrichtung ausgeführt wird, die Rechenverarbeitungsvorrichtung veranlasst, das Verfahren auszuführen, das dazu ausgelegt ist, die Sicherheit des Steuerungssystems für einen Antriebsmotor gemäß Anspruch 8 zu gewährleisten.

## Revendications

1. Système de commande de moteur d'entraînement, comprenant : un contrôleur principal (21), un module de commande logique d'entraînement de grille (23), un contrôleur auxiliaire (22) et un module de circuit d'entraînement de grille (24) ;
le contrôleur principal (21) est connecté électriquement au module de commande logique d'entraînement de grille (23) et est utilisé pour acquérir un droit de commande d'entraînement de grille en interagissant avec le module de commande logique d'entraînement de grille (23), afin d'effectuer une commande d'entraînement de moteur par l'intermédiaire du module de commande logique d'entraînement de grille (23) et du module de circuit d'entraînement de grille (24) à tour de rôle ;
le contrôleur auxiliaire (22) est connecté électriquement au contrôleur principal (21) et au module de commande logique d'entraînement de grille (23), et est utilisé pour prendre le droit de commande d'entraînement de grille en interagissant avec le module de commande logique d'entraînement de grille (23) à condition que le contrôleur principal (21) soit en état de défaut, afin d'effectuer une commande d'entraînement de moteur par l'intermédiaire du module de commande logique d'entraînement de grille (23) et du module de circuit d'entraînement de grille (24) à tour de rôle ;
le module de commande logique d'entraînement de grille (23) est connecté électriquement au module de circuit d'entraînement de grille (24) et est utilisé pour réaliser la commande, par le contrôleur principal (21) et le contrôleur auxiliaire (22), sur le droit de commande d'entraînement de grille et pour transmettre, au module de circuit d'entraînement de grille (24), un signal de commande émis par le contrôleur principal (21) ou le contrôleur auxiliaire (22) en réponse au droit de commande d'entraînement de grille ; et
le module de circuit d'entraînement de grille (24) est connecté électriquement à un moteur et est utilisé pour entraîner le moteur en réponse au signal de commande,
dans lequel le module de commande logique d'entraînement de grille (23) comprend : un circuit de traitement de droit de commande (231), un circuit tampon de signal d'entraînement PWM (232) et un circuit de commande de protection de grille (233) ;
le système de commande de moteur d'entraînement est **caractérisé en ce que** :
le circuit de traitement de droit de commande (231) est connecté électriquement au contrôleur principal (21), au contrôleur auxiliaire (22), au circuit de commande de protection de grille (233) et au circuit tampon de signal d'entraînement PWM (232), et est utilisé pour exécuter :
l'émission d'un premier signal de niveau logique pour permettre au contrôleur principal (21) d'acquérir le droit de commande d'entraînement de grille au circuit tampon de signal d'entraînement PWM (232) à condition qu'un premier signal d'activation du contrôleur principal (21) soit reçu et qu'un deuxième signal d'activation du contrôleur auxiliaire (22) ne soit pas reçu ; et
l'émission d'un deuxième signal de niveau logique pour permettre au contrôleur auxiliaire (22) de prendre le droit de commande d'entraînement de grille au circuit de commande de protection de grille (233) à condition que le deuxième signal d'activation du contrôleur auxiliaire (22) soit reçu ;
le circuit tampon de signal d'entraînement PWM (232) est connecté électriquement au module de circuit d'entraînement de grille (24) et au contrôleur principal (21), et est utilisé pour transmettre le signal de commande émis par le contrôleur principal (21) en réponse au droit de commande d'entraînement de grille au module de circuit d'entraînement de grille (24) à condition que le premier signal de niveau logique soit reçu ; et
le circuit de commande de protection de grille (233) est connecté électriquement au module de circuit d'entraînement de grille (24) et au contrôleur auxiliaire (22), et est utilisé pour transmettre le signal de commande émis par le contrôleur auxiliaire (22) en réponse au droit de commande d'entraînement de grille au module de circuit d'entraînement de grille (24) à condition que le deuxième signal de niveau logique soit reçu.

2. Système de commande de moteur d'entraînement selon la revendication 1, **caractérisé en ce que** le circuit de traitement de droit de commande (231) comprend : un circuit de blocage de filtre (A), un tampon de conversion de niveau (U2) et une bascule (U1) ;
le circuit de blocage de filtre (A) est connecté électriquement au contrôleur principal (21) et est utilisé pour convertir le premier signal d'activation reçu en un premier signal d'impulsion ;
le tampon de conversion de niveau (U2) est connecté électriquement au contrôleur auxiliaire (22) et à la bascule (U1) et est utilisé pour émettre un deuxième signal d'impulsion à condition que le deuxième signal d'activation soit reçu ; et
la bascule (U1) est connectée électriquement au circuit tampon de signal d'entraînement PWM (232) et au circuit de commande de protection de grille (233), et est utilisée pour exécuter :
l'émission du premier signal de niveau logique à condition que le premier signal d'impulsion soit reçu et que le deuxième signal d'impulsion ne soit pas reçu ; ou
l'émission du deuxième signal de niveau logique à condition que le deuxième signal d'impulsion soit reçu.

3. Système de commande de moteur d'entraînement selon la revendication 1, **caractérisé en ce que** le circuit de traitement de droit de commande (231) comprend en outre : une alimentation électrique utilisée pour fournir une pluralité de tensions de fonctionnement à la bascule (U1).

4. Système de commande de moteur d'entraînement selon la revendication 1, **caractérisé en ce que** le circuit tampon de signal d'entraînement PWM (232) comprend en outre : un circuit de grille logique (U5) et un premier tampon (U4) ;
le circuit de grille logique (U5) est connecté électriquement au circuit de traitement de droit de commande (231) et est utilisé pour convertir le premier signal de niveau logique reçu en un signal d'activation logique ; et
le premier tampon (U4) est connecté électriquement au circuit de grille logique (U5) et au contrôleur principal (21), et est utilisé pour transmettre le signal de commande émis par le contrôleur principal (21) au module de circuit d'entraînement de grille (24) à condition que le signal d'activation logique soit reçu.

5. Système de moteur d'entraînement selon la revendication 1, **caractérisé en ce que** le circuit de commande de protection de grille (233) comprend : un circuit de verrouillage logique (B) et un deuxième tampon (U6) ;
le circuit de verrouillage logique (B) est connecté électriquement au contrôleur auxiliaire (22) et est utilisé pour convertir le signal de commande provenant du contrôleur auxiliaire (22) en un signal logique de commande illustrant un mode de sécurité actuel ; et
le deuxième tampon (U6) est connecté électriquement au circuit de traitement de droit de commande (231), au circuit de verrouillage logique (B) et au module de circuit d'entraînement de grille (24), et est utilisé pour convertir le signal logique de commande en un signal d'entraînement de moteur à condition que le deuxième signal de niveau logique soit reçu, et pour transmettre le signal d'entraînement de moteur au module de circuit d'entraînement de grille (24), de sorte que le module de circuit d'entraînement de grille (24) entraîne le moteur à fonctionner dans un mode d'arrêt d'impulsion ou un mode de court-circuit actif.

6. Système de commande de moteur d'entraînement selon la revendication 1, **caractérisé en ce que** le module de commande logique d'entraînement de grille (23) comprend en outre :
un circuit de réinitialisation de défaut d'entraînement (U3) utilisé pour commander une réinitialisation du système de moteur d'entraînement à condition que le droit de commande du module de circuit d'entraînement de grille (24) soit commandé et commuté par le contrôleur principal (21) et le contrôleur auxiliaire (22).

7. Système de commande de moteur d'entraînement selon la revendication 1, **caractérisé en ce que** le module de commande logique d'entraînement de grille (23) comprend en outre :
un circuit de surveillance de défaut d'entraînement (C) utilisé pour filtrer des signaux de défaut d'entraînement illustrant des fronts haut et bas de l'entraînement de grille provenant du module de circuit d'entraînement de grille (24) et envoyer les signaux filtrés au contrôleur auxiliaire (22).

8. Procédé adapté pour assurer une sécurité d'un système de commande de moteur d'entraînement selon l'une quelconque des revendications 1 à 7, et le procédé comprenant :
la commande du contrôleur auxiliaire (22) pour prendre le droit de commande d'entraînement de grille du module de circuit d'entraînement de grille (24) à condition que le contrôleur principal (21) soit dans un état de défaut ; et
la transmission d'un signal de commande émis par le contrôleur auxiliaire (22) en réponse au droit de commande d'entraînement de grille au module de circuit d'entraînement de grille (24) afin de permettre au module de circuit d'entraînement de grille (24) d'entraîner un moteur pour fonctionner dans un mode d'arrêt d'impulsion ou un mode de court-circuit actif.

9. Support de stockage lisible par machine, **caractérisé en ce que** le support de stockage lisible par machine stocke une instruction, et l'instruction est utilisée pour amener une machine à exécuter le procédé adapté pour assurer la sécurité du système de commande de moteur d'entraînement selon la revendication 8.

10. Dispositif de traitement informatique, **caractérisé en ce qu'**il comprend :
une mémoire dans laquelle est stocké un code lisible par ordinateur ; et
un ou plusieurs processeurs, dans lequel, lorsque le code lisible par ordinateur est exécuté par ledit un ou lesdits plusieurs processeurs, le dispositif de traitement informatique exécute le procédé adapté pour assurer la sécurité du système de commande de moteur d'entraînement selon la revendication 8.

11. Programme informatique comprenant un code lisible par ordinateur qui, lorsqu'il est exécuté sur un dispositif de traitement informatique, amène le dispositif de traitement informatique à exécuter le procédé adapté pour assurer la sécurité du système de commande de moteur d'entraînement selon la revendication 8.
